Europäisches Patentamt

European Patent Office

Office européen des brevets

(19)

(11) Publication number: **0 113 720**
**B1**

(12) **EUROPEAN PATENT SPECIFICATION**

(45) Date of publication of patent specification: **26.10.88**

(51) Int. Cl.⁴: **G 06 K 9/18, G 06 K 7/12**

(21) Application number: **82903197.0**

(22) Date of filing: **22.07.82**

(86) International application number:
**PCT/US82/01011**

(87) International publication number:
**WO 84/00631 16.02.84 Gazette 84/05**

(54) COLOR CODED SYMBOLIC ALPHANUMERIC SYSTEM.

(43) Date of publication of application:
**25.07.84 Bulletin 84/30**

(45) Publication of the grant of the patent:
**26.10.88 Bulletin 88/43**

(84) Designated Contracting States:
**AT BE CH DE FR GB LI LU NL SE**

(56) References cited:
**GB-A- 598 044**
**US-A- 238 566**
**US-A- 341 754**
**US-A- 887 342**
**US-A-1 571 488**
**US-A-1 603 340**
**US-A-2 362 004**
**US-A-3 176 141**
**US-A-3 471 684**
**US-A-3 482 333**
**US-A-3 486 006**
**US-A-3 612 536**
**US-A-3 813 471**
**US-A-3 938 088**
**US-A-3 982 333**
**US-A-4 202 548**
**US-A-4 243 225**
**US-A-4 327 911**

(73) Proprietor: **KREMPEL, Ralf**
**Am Frankfurter Weg 15**
**D-6056 Heusenstamm (DE)**

(72) Inventor: **KREMPEL, Ralf**
**Am Frankfurter Weg 15**
**D-6056 Heusenstamm (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Summary of the invention

The principal object of the Krempel Code invention, known from hereon also as Visual Communication System, is the fact that it can create a visual alphabet by using different color dots, squares as well as any other forms or figures,—even letters and differently shaded shapes to simulate the different colors will work—if given the sequence system and numerical order.

Whereby it will be easy under the Krempel Code just by changing around the established number and color of the markings to produce a cryptographic script, the main purpose of the Visual Communication System is not the scrambled effect for the reason of portraying secret messages but instead exactly the opposite direction is aimed and desired for because by working in an open widely known manner the rules of the Krempel Code can easily infiltrate into the universal knowledge for the beneficial enrichment and enlightenment of all modern humankind.

By memorizing the simple letter order of the Visual Communication System color method very soon the general public is able to read not only single letters, but words, sentences as well as anything else just by looking at the displayed color markings.

The range of the Krempel Code will be endless. The Visual Communication System can be used in any environment for relaying the conveying messages and information of all kinds and sorts in the fields of the Art, Poetry, Science, Education, Communication, Advertisement, Computers, Toys and Games and so forth.

GB—A—598 044 (Hickey) discloses a method of representing alphabet letters by means of colored shapes, each letter being represented by a unique combination of color and shape. This method involves the use of five different shapes.

### Brief description of the drawings

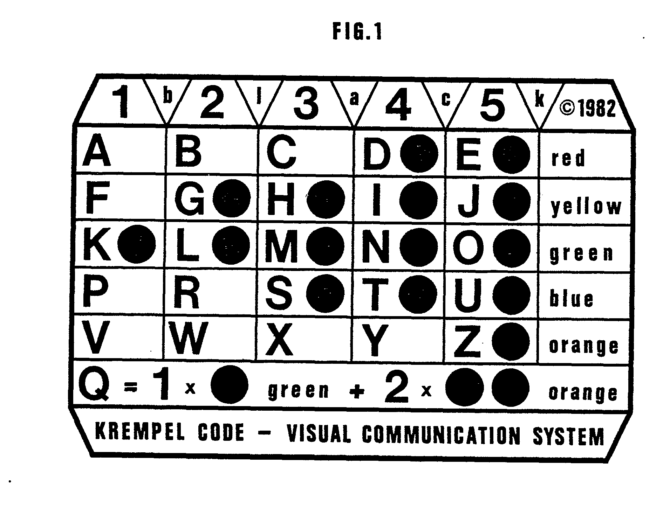

Figure 1 illustrates a designed visual record of the system known by the name of Krempel Code or Visual Communication System.

Figure 2 illustrates a three line sampler of the accord.

### Description of the preferred embodiment

Utilizing a five color scheme on a black background, any other background or no background at all the 26 letters of the English, German and any other modern alphabet which uses the 26 letter sequence are subdivided into a detailed systematic diagram of display.

Each of the letters is positioned in the array of 1 to 5. Placing the Number 1 in the center role. Number 2 is placed one in the center and one above. Number 3 is one in the center, one above and one below. Number 4 is one in the center, two above and one below. Finally Number 5 is one in the center, two above and two below.

The first 5 letters A B C D E are using the color red. A gets thereby the center role and E the 5 row position of red. The second 5 letters F G H I J are using the color yellow. F gets thereby the center role and J the 5 row position of yellow. The third 5 letters K L M N O are using the color green. K gets thereby the center role and O the 5 row position of green. The fourth 5 letters P R S T U are using the color blue. P gets thereby the center role and U the 5 row position of blue. The fifth 5 letters V W X Y Z are using the color orange. V gets thereby the center role and Z the 5 row position of orange. The letter Q finally has in its 3 row position in the center the color green and one above and one below orange.

The same interpretation can also be explained by the simple diagramed charts as follows:

| | | | | | |
|---|---|---|---|---|---|
| Red: | A=1, | B=2, | C=3, | D=4, | E=5 |
| Yellow: | F=1, | G=2, | H=3, | I=4, | J=5 |
| Green: | K=1, | L=2, | M=3, | N=4, | O=5 |
| Blue: | P=1, | R=2, | S=3, | T=4, | U=5 |
| Orange: | V=1, | W=2, | X=3, | Y=4, | Z=5 |

Q=1 Green+2 Orange

or

A=1red,B=2red,C=3red,D=4red,E=5re
F=1yellow,G=2ye,H=3ye,I=4ye,J=5ye
K=1green,L=2gre,M=3gr,N=4gr,O=5gr
P=1blue,R=2blue,S=3bl,T=4bl,U=5bl
V=1orange,W=2or,X=3or,Y=4or,Z=5or
Q=1green+2orange

Other additional letters, like for instance the German umlaut Ä Ö Ü or the French accent marks é è ç will be demonstrated by adding the special characteristics of the letters in the center of the top or bottom color symbol.

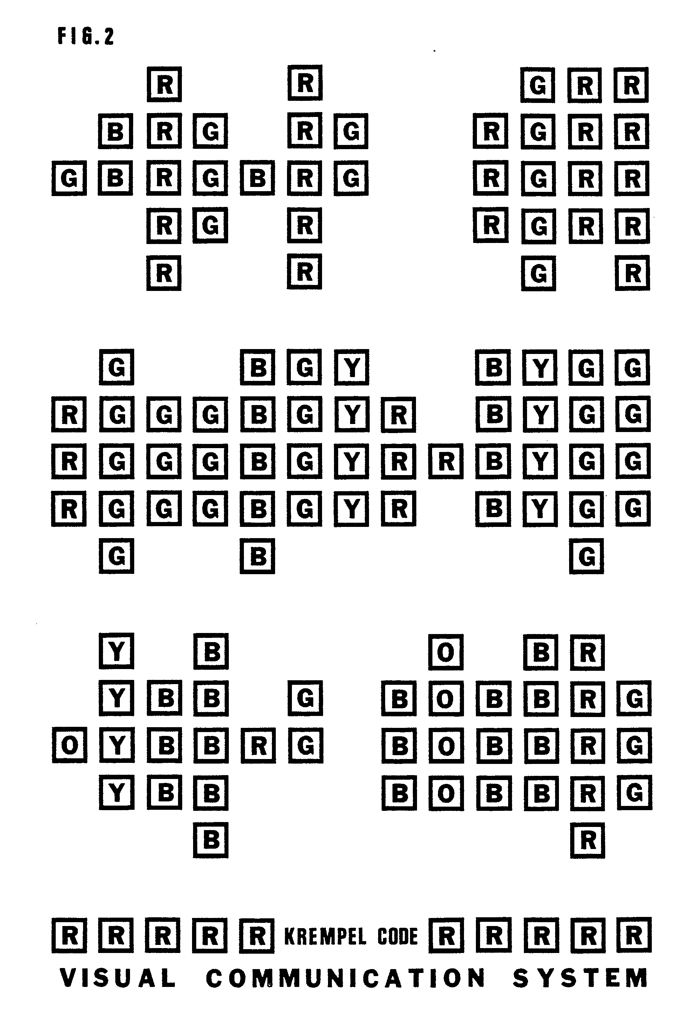

Although the Krempel Code system works primarily in color, in Figure 2 for illustrating purposes a black square mode of identification has been used wherein the different colors have been marked by letters as follows:

R for Red
Y for Yellow
G for Green
B for Blue
O for Orange

The three line Krempel Code sampler in Figure 2 reads the following:

Krempel Code
Communication
Visual System

To demonstrate the language the individual Visual Communication System display is in, the mode of depiction utilizes at the bottom the appropriate number of color symbols for the first letter of the name of the language in horizontal instead of vertical fashion on the right and left side of the words Krempel Code.

The Krempel Code—Visual Communication System can according to the above explanation also be utilized by employing the shape of the cubic form. Each of the six face sides of the cube is hereby covered with a different color. One side is red, clockwise the next yellow, then green followed by blue. The bottom is orange and the top is black/neutral. Or any other color combination is possible.

By using for an example a bordered square tray or board of 17 horizontal and vertical spaces, on which in either direction can be played, it is possible with 289 square cubes marked with the 6 color combination to form 3 lines each of 17 different displayed pictorial letters. 5 rows are needed thereby for the top line. One row remains free for space. Thereafter follows the second line of 5 rows. Again another free row is needed followed by the 5 rows of the bottom line. To aid the forming of the lines, center line marks are applied on all sides of the bordered tray or board, marking the middle row of every indicated line. Hence on a square tray or board with 17 spaces on each side, the center line marks are in the middle as well as 3 rows away from every corner.

Naturally there are other and further combinations and uses, too numerous to mention, possible for the Krempel Code—Visual Communication System.

Herewith the invention has been described and detailed in specific terms. However modifications can occur to those skilled in the field of the state of art. As for the true scope of the invention reference should be made to the appended claims.

## Claims

1. A method of visual communication using colors comprising the steps of; dividing the letters of an alphabet into a plurality of rows and columns on a code carrier means; designating each of said rows on said code carrier means with a different color; designating each of said columns on said code carrier means with a different number; applying symbols to an information carrier means in lieu of alphabet letters, the symbols being of the same color as, and equal in number to, the color and number indicia which designates the row and column on the code carrier means where the corresponding alphabet letter is located.

2. A visual communications device comprising; a board covered with a gridlike surface marked on its face, the edges of said board depicting markings designating groups of square locations, and a plurality of information carrier cubes to be mounted on said board, each of said information carrier cubes having a plurality of surfaces, each surface of one of said cubes being of a different color, the information carrier cubes being positionable on said square locations with particular color surfaces uppermost so as to represent specific alphabet letters in accordance with the method claimed in Claim 1.

## Patentansprüche

1. Eine farbliche visuelle Kommunikationsmethode die folgende umfassende Schritte enthält; die Einteilung der Buchstaben eines Alphabets in eine Mehrzahl von Reihen und Spalten in einem Codeträgermittel; die Designierung jeder der besagten Reihen im besagten Codeträgermittel mit einer verschiedenen Farbe; die Designierung jeder der besagten Spalten in besagten Codeträgermittel mit einer verschiedenen Nummer; die Verwendung von Symbolen auf einen Informationsträgermittel anstelle von Buchstaben eines Alphabets, die Symbole dabei bestehend von der gleichen Farbe als, und gleich in Nummer zu, den Farben- und Nummerindizien welche die Reihe und Spalte designieren im Codeträgermittel wo der korrespondierende Alphabetbuchstabe lokalisiert ist.

2. Ein visuelles Kommunikationssystem das folgendes umfasst; ein Brett worauf gitterartige Einteilungen sich befinden, die Ränder des besagten Brett haben Markierungen die designierte Gruppen von quadratischen Einteilungen kennzeichnen, und eine Mehrzahl von Informationswürfel die auf das besagte Brett gesetzt werden, jeder dieser besagten Informationswürfel hat eine Pluralität von Oberflächen, jede Oberfläche von einen dieser besagten Informationswürfel hat eine unterschiedliche Farbe, die Informationswürfel werden in den besagten quadratischen Lokalitäten jeweils so positiert, dass die partikulären farbigen Oberflächen nach oben zeigend spezifische Buchstaben repräsentieren in Übereinstimmung mit der Methode beansprucht in Patentanspruch 1.

## Revendications

1. Méthode de communication visuelle utilisant des couleurs et comprenant les étapes suivantes: division des lettres d'un alphabet en une pluralité de rangées et de colonnes sur un moyen porteur de code; désignation de chacune desdites rangées sur ledit moyen proteur de code par une couleur différente; désignation de chacune desdites colonnes sur ledit moyen porteur de code par un nombre différent; application de symboles, au lieu de lettres d'alphabet, à un moyen porteur d'information, les symboles étant de la même couleur et égaux en nombre aux couleurs et indices numériques désignant les rangées et les colonnes du moyen porteur de code où la lettre d'alphabet correspondante est située.

2. Appareil de communication visuelle comprenant: une carte recouverte ou imprimée d'une surface grillée sur sa face plane, les bords de la carte illustrant des marques désignant des groupes d'emplacements carrés et, une pluralité de cubes porteurs d'information à monter sur ladite carte, chacun desdits cubes porteurs d'information ayant une pluralité de faces, chaque face de l'un desdits cubes étant d'une couleur différente, les cubes porteurs d'information pouvant être positionnés sur lesdits emplacements carrés avec les faces portant certaines couleurs particulières mises en évidence sur la partie supérieure de manière à représenter des lettres d'un alphabet donné suivant la méthode revendiquée dans la Revendication 1.

## FIG.1

KREMPEL CODE — VISUAL COMMUNICATION SYSTEM

**FIG.2**

KREMPEL CODE

VISUAL COMMUNICATION SYSTEM